# EUROPEAN PATENT APPLICATION

(11) **EP 2 813 985 A1**
(43) Date of publication of application: **17.12.2014**
(21) Application number: 14170282.9
(22) Date of filing: 28.05.2014
(51) Int. Cl.: G06Q 20/00, G06F 17/30

(54) **Method and apparatus for subscriber account selection**

(30) Priority: 13.06.2013 US 201313917364
(71) Applicant: Telefonaktiebolaget L M Ericsson (PUBL), SE-164 83 Stockholm (SE)
(72) Inventor: Törnkvist, Robert, 37438 Karlshamn (SE)
(74) Representative: Egrelius, Fredrik

(57) **Abstract**

For a given "consumer" having associations with multiple "provider" accounts that are possible targets for charging with respect to a chargeable event involving the consumer, only one or a relative handful of those provider accounts are likely to be actual candidates for charging. Correspondingly, a network node maintains provider account status information indicating whether a given provider account is a candidate for charging in a general sense and in a consumer-specific sense. Account information is retrieved only for the provider accounts indicated as actual candidates for charging, meaning that unnecessary data fetching, account locking, and charging reservation mechanisms are avoided for accounts that are not indicated as being actual candidates for charging with respect to the particular consumer and particular chargeable event.

## Description

### TECHNICAL FIELD

The present invention generally relates to communication networks, and particularly relates to facilitating credit control with respect to a chargeable event involving a consumer that is associated with one or more provider accounts.

### BACKGROUND

Charging represents key functionality in wireless communication systems and other subscriber-based communication networks and services. Within the various charging and billing operations known in such networks, it is fairly common to share certain accounts or funds. Aggregating shared account data into a single database offers the advantage of localizing all or most of the relevant data needed for charging in one location. The opposite approach is allowing for a distribution of account data over multiple databases, in different locations.

The latter approach tends to limit the sizes of the individual account databases, which simplifies database access and offers better read/write performance. On the downside, distributed databases require remote access and more sophisticated reservation and locking schemes between databases. The former approach, based on unification or aggregation of data into one logical location, addresses those problems, but does so at the expense of potentially very large data sets, which can be unwieldy to access and manipulate in real time.

In either case, when a chargeable event involves multiple accounts, e.g., one or more shared accounts, or at least potentially involves multiple accounts for charging, it is necessary to fetch account data for those accounts. Multi-account data fetching introduces a number of complications, such as whether and to what extent should the involved accounts be "locked" with respect to other chargeable transactions during the evaluation of account data, whether charging reservations should be imposed on the accounts that are fetched until final reconciliation of how the chargeable event is to be charged, etc.

In a simple example, a given user subscribes to a wireless communication network and that subscription includes a family plan that provides for a number of wireless devices, including a wireless device belonging to the given user, and individual device-specific plans that provide, e.g., enhanced data services. This same user's employer, however, also maintains a shared account for its employees, meaning that a given chargeable event involving the user's wireless device may be chargeable to any one or more of three accounts. Of course, much more complicated scenarios involving larger numbers of potentially chargeable accounts are possible.

Current approaches to charging address the problem of potentially large numbers of accounts being available, at least in theory, for charging with respect to a given chargeable event, by limiting the number of accounts that can be charged for events involving a given device, e.g., such as by limiting the number of accounts that can be associated with a communication session.

### SUMMARY

For a given "consumer" having associations with multiple "provider" accounts that are possible targets for charging with respect to a chargeable event involving the consumer, it is advantageously recognized herein that only one or a relative handful of those provider accounts are likely to be actual candidates for charging with respect to any given chargeable event. Correspondingly, a network node maintains provider account status information indicating whether a given provider account is a candidate for charging in a general sense and in a consumer-specific sense. Account information is retrieved only for the provider accounts indicated as actual candidates for charging, meaning that unnecessary data fetching, account locking, and charging reservation mechanisms are avoided for accounts that, while affiliated with the consumer, are not indicated as being actual candidates for charging with respect to the particular consumer and particular chargeable event.

A contemplated method taught in one example herein includes identifying provider accounts that potentially are selectable for charging with respect to a chargeable event involving a consumer. The provider accounts, if any, are referred to as identified provider accounts, and the method further includes fetching provider account status information corresponding to the identified provider accounts and the consumer. The provider account status information includes first status information indicating a consumer-specific availability of the identified provider accounts for charging and second status information indicating a general availability of the identified provider accounts for charging.

The method continues with evaluating the provider account status information to determine which identified provider accounts are candidates for charging with respect to the chargeable event, each such identified provider account being referred to as a candidate provider account. With the candidate provider accounts thus determined, the method continues with retrieving provider account information from an account balance management node only for the candidate provider accounts, for use in said credit control. By virtue of this winnowing or culling of provider accounts to just those provider accounts that are indicated as actual candidates for charging with respect to the chargeable event, the method avoids unnecessary fetching of account data and unnecessary account locking and charging reservations.

In another example, a network node is configured for facilitating credit control. The network node includes communication interface circuits that are configured to communicate with one or more other network nodes, including an account balance management node. The node further includes a processing circuit that is configured to identify provider accounts that potentially are selectable for charging with respect to a chargeable event involving a consumer, which provider accounts, if any, are referred to as identified provider accounts.

Still further, the processing circuit is configured to fetch provider account status information corresponding to the identified provider accounts and the consumer, which provider account status information includes first status information indicating a consumer-specific availability of the identified provider accounts for charging and second status information indicating a general availability of the identified provider accounts for charging. Correspondingly, the processing circuit is configured to evaluate the provider account status information to determine which identified provider accounts are candidates for charging with respect to the chargeable event, each such identified provider account being referred to as a candidate provider account, and to retrieve provider account information from the account balance management node only for the candidate provider accounts, for use in said credit control.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of a communication network that includes a node configured for facilitating credit control according to an example of the teachings herein.
Fig. 2 is a block diagram of an embodiment of the node introduced in Fig. 1, for facilitating credit control.
Fig. 3 is a block diagram of the node processor introduced in Fig. 2 and illustrates example data objects input to and/or generated by the processor, for facilitating credit control.
Fig. 4 is a diagram of one embodiment of provider account status information as a data object or other logical structure, as may be realized in a non-transient form within a memory or other computer-readable medium.
Fig. 5 is a diagram illustrating an example data structure arrangement for maintaining the provider account status information introduced in Fig. 4, for any number of provider accounts and associated consumers, where first status information is consumer-specific and second status information is account-specific.
Fig. 6 is a diagram illustrating an example configuration of consumer-specific and account-specific information maintained in provider account status information for a given provider account and for a given consumer.
Fig. 7 is a logic flow diagram of one embodiment of a method of processing at a node configured for facilitating credit control in or in association with an online and/or offline charging system.
Fig. 8 is a diagram illustrating an example data structure arrangement for provider account status information according to one embodiment.
Fig. 9 is a diagram illustrating an example data structure arrangement for provider account status information according to another embodiment.

### DETAILED DESCRIPTION

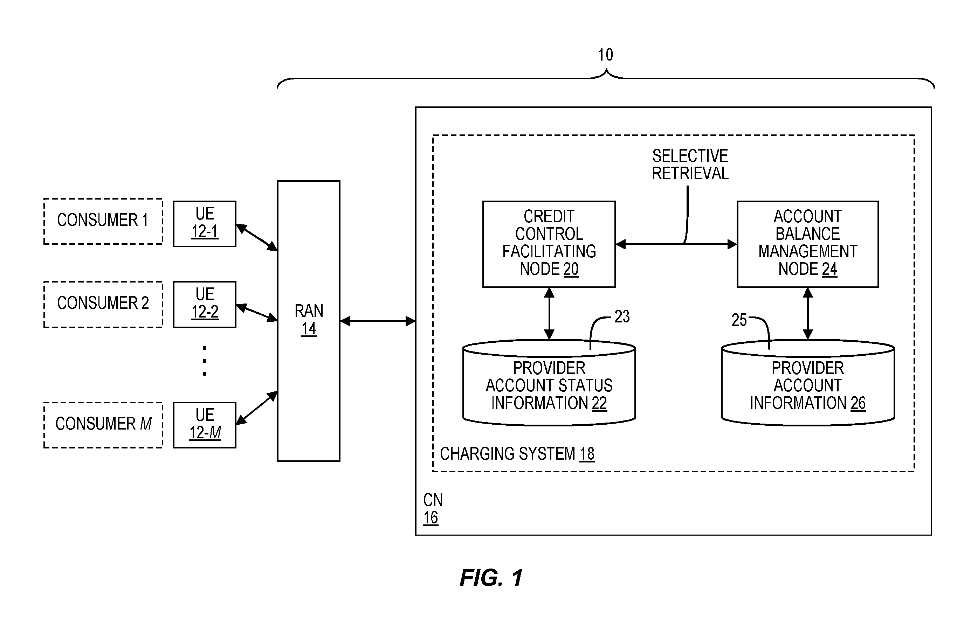

Fig. 1 provides a simplified illustration of a communication network 10, such as a cellular or other wireless communication network that provides data and/or voice connectivity to wireless devices, shown here as "User Equipments" or UEs 12, e.g., 12-1, 12-2, ..., 12-M. As various non-limiting examples, any given one of the UEs 12 may be a smartphone, cellular modem or other wireless adaptor, a tablet or laptop computer, or essentially any wireless device or apparatus that is configured for communications with or through the communication network 10.

Moreover, in a generalized sense, each UE 12 uses the communication services provided by the communication network 10 according to one or more service subscriptions associated with the UE 12. For example, during the initial authentication and attachment procedures between a UE 12 and the communication network 10, which are well known in the art, the International Mobile Subscription Identifier (IMSI) or other such identifier of the UE 12 is provided to the communication network 10, for use in authenticating the UE 12 and identifying its related subscription information. For purposes of this discussion, it is assumed that one or more of the UEs 12 are associated with more than one subscription or, in a more generalized sense, it is assumed that one or more of the UEs 12 are affiliated with multiple subscriber accounts.

In one example, a given UE 12 may be affiliated with an individual subscriber account that is specific to the UE 12, and one or more shared accounts. For instance, the UE 12 may be affiliated with the subscriber account maintained by a corporation or other entity that employs the user of the UE 12 and/or the UE 12 may be affiliated with a family-plan account that covers the UE 12 and one or more other UEs 12. Of course, these are non-limiting examples and there may be any number of shared subscriber accounts associated with a given UE 12, in addition to any individual subscriber account that is associated with the UE 12. Thus, for one or more of the UEs 12, when the UE 12 is involved in a chargeable event with the communication network 10, e.g., when making a voice call or making a data connection, there is more than one subscriber account that is, at least in theory, available for charging with respect to the chargeable event.

To simplify the discussion, a given UE 12 and its user are broadly referenced as being a "consumer." Thus, saying that a "consumer" is associated with a chargeable event implies that a given UE 12 and its user/operator are engaging in chargeable communications activity. This definition encompasses not only human users of UEs 12, but also Machine-Type-Communication (MTC) uses, where a Machine-to-Machine (M2M) application or Services Capability Layer (SCL) engages in communications via the communication network 10. As a further language simplification, while individual and shared accounts are all forms of "subscriber" accounts from the perspective of the communication network 10, a shared account that is at least in theory chargeable with respect to a given chargeable event is referred to as a "provider" account, to denote that it is a possible provider of credit for charging the event.

Turning back to the diagram, consumers access the communication network 10 via an included Radio Access Network or RAN 14, which generally includes a number of radio base stations (not shown) providing communications service in respective, overlapping service areas or cells that in the aggregate cover a relatively large geographic area. A Core Network or CN 16 couples with the RAN 14 and includes a number of entities for managing and providing voice and data services carried through the RAN 14, such as Mobility Management Entities or MMEs, Packet Gateways or P-GWs, positioning nodes, operations and maintenance nodes, etc. As these core functions are not germane to this discussion, they are not illustrated and it should be understood that the CN 16 is presented in simplified form.

Of particular interest, the CN 16 includes a charging system 18, that provides for online and/or offline charging of communication activities involving the various consumers using the communication network 10. The charging system 18 in the non-limiting example illustration includes a credit control facilitating node 20, which is more generically referred to herein as a "communication network node" or, more simply, merely as "the node 20." According to the advantageous teachings herein, the node 20 includes or otherwise has access to provider account status information 22, which may be held in a data store 23 that is integrated within the node 20 or that is accessible to the node 20 via one or more data connections. The data store 23 may be solid-state memory, disk storage, or any other computer-readable medium that provides persistent storage of the provider account status information 22.

Further in that regard, for purposes of illustration, the provider account status information 22 that is shown suggests a unitary data item. While that configuration is contemplated, it is also contemplated that the provider account status information 22 may include distributed elements, in dependence on its implementation details. Non-limiting examples of those options are explored later in this disclosure.

The charging system 18 further includes an account balance management node 24, which includes or is associated with a data store 25 that holds provider account information 26, e.g., actual account details for any number of provider accounts. Such details include, for example, account status, available credit information, payment dates, level of services provided, etc. In this regard, the provider account status information 22 differs in a number of important respects, inasmuch as it is not the actual account information but rather a set of indicators or other data items that are disclosed herein as being particularly useful for evaluating whether a given provider account is an actual candidate for charging with respect to a specific chargeable event involving a specific consumer.

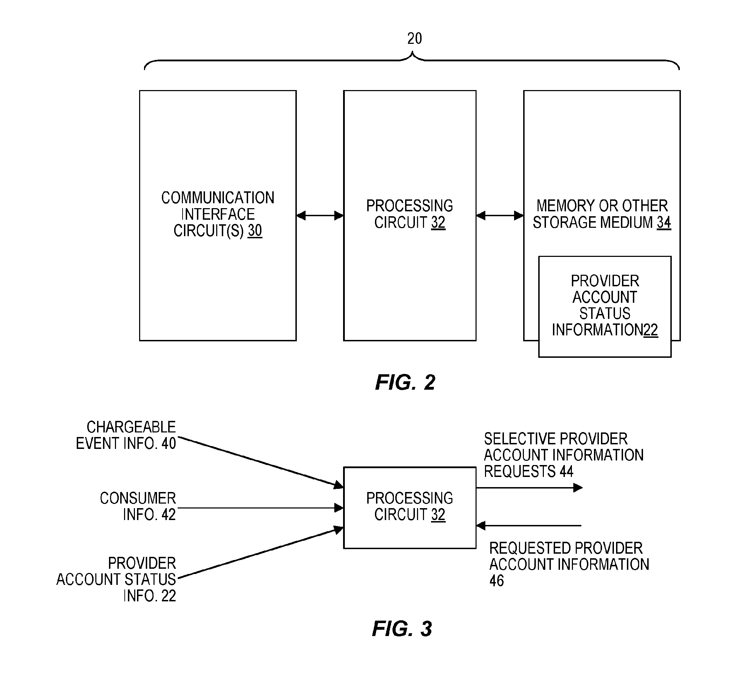

Figs. 2 and 3 help clarify such advantageous processing, where Fig. 2 provides a simplified depiction of the primary elements comprising the node 20 in one example. According to Fig. 2, the node 20 includes one or more communication interface circuits 30, a processor circuit 32, and memory or other storage medium 34 (which is referred to simply as "memory 34" hereinafter). In an example where the provider account status information is local to the node 20, which is recognized herein as offering a number of advantages in terms of minimizing inter-node signaling within the CN 16, the memory 34 may be used to store the provider account status information 22.

The communication interface circuits 30 in one example include one or more physical-layer circuits and associated higher protocol layer processing. Further, the processor circuit 32 in one embodiment comprises one or more CPUs or other microprocessor-based circuits, e.g., such as where the node 20 is a networked computer server operating within the charging system 18. Broadly, the processor circuit 32 comprises one or more digital processing circuits, which may be at least partially configured based on the execution of computer program instructions stored in the memory 34.

Regardless of the implementation particulars, Fig. 3 illustrates a functional processing example involving the processor circuit 32. The processor circuit 32 operates on a number of data inputs, including chargeable event information 40, consumer information 42, provider account status information 22 and requested provider account information 46, which it receives responsive to sending selective provider account information request(s) 44. The chargeable event information 40 comprises one or more indicators or other items of information characterizing a given chargeable event, such as an indication of the event type, e.g., voice call or data connection, and/or time/date information for the event. The consumer information 42 comprises one or more indicators or other items of information regarding the consumer, e.g., an IMSI or other wireless device identifier.

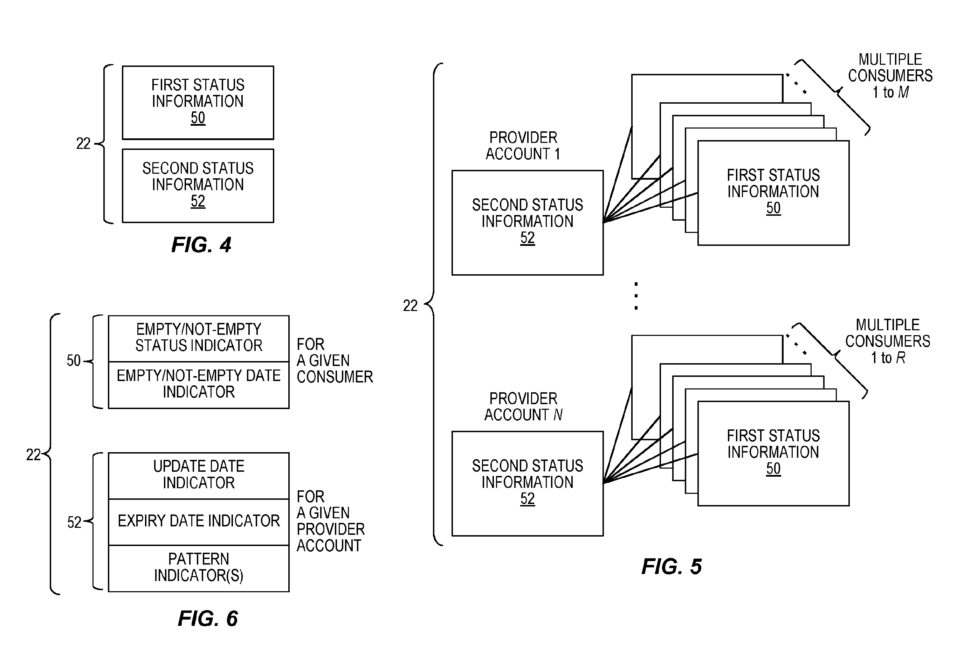

As for the provider account status information, Fig. 4 illustrates that such information in one or more embodiments comprises first status information 50 and second status information 52. The first status information 50 indicates a consumer-specific availability of identified provider accounts for charging and the second status information 52 indicates a general availability of the identified provider accounts for charging. While not shown in Fig. 4 on an account-specific basis or on a consumer-specific basis, it will be understood that the first and second information 50 and 52 shown in Fig. 4 may be maintained for multiple provider accounts and for multiple consumers.

Such an arrangement is better seen in the example details shown in Fig. 5, where there is second status information 52 for each of *N* provider accounts (where *N* is an integer number greater than or equal to one). Fig. 5 further shows that each provider account generally is associated with number of consumers, e.g., the "Provider Account 1" is associated with consumers 1 to *M*, while the "Provider Account N" is associated with consumers 1 to *R*. The *M* and *R* groups of consumers may be unique, or one or more consumers may be in both groups, i.e., where a given consumer is associated with multiple provider accounts.

Fig. 6 shows an example configuration of such information for a given provider account and for a given consumer. Namely, the first status information 50 for a given consumer includes, for example, an empty/not-empty status indicator that indicates whether a given provider account is considered empty with respect to charging for this specific consumer. The empty/not-empty indicator is paired or associated with an empty/not-empty date indicator, which indicates the last date at which the empty/not-empty indicator was updated. It will be understood that such indicators are maintained for the given consumer for each provider account with which the consumer is affiliated.

The second status information 52 in Fig. 6 is shown for a given provider account and like information may be maintained for any number of provider accounts. For the given provider account and as a non-limiting example, the second status information 52 includes an update date indicator, an expiry date indicator and one or more pattern indicators. The update date indicator indicates the date at which the provider account was last replenished, verified, etc. The expiry date indicator indicates an expiration date for the provider account in general, or for special promotions associated with the provider account, and the pattern indicators indicate one or more usage or charging restrictions associated with the account-e.g., permitted or non-permitted times of usage, permitted or non-permitted types of charging events, etc. For example, a given provider account may be owned by a corporation or other employer and movie or music streaming may not be permitted for data charging against the provider account. As another example, a given provider account may be owned by a corporation or other employer and the charging of calls during non-office hours to the provider account is not permitted.

With the above in mind, in one embodiment, the node 20 is configured for facilitating credit control and comprises communication interface circuits 30 configured to communicate with one or more other network nodes, including an account balance management node 24, and a processor circuit 32 that is configured to carry out a number of processing steps or actions. Among these processing actions, the processor circuit 32 is configured to identify provider accounts that potentially are selectable for charging with respect to a chargeable event involving a consumer, which provider accounts, if any, are referred to as identified provider accounts.

The processor circuit 32 is further configured to fetch provider account status information 22 corresponding to the identified provider accounts and the consumer, which provider account status information 22 includes first status information 50 indicating a consumer-specific availability of the identified provider accounts for charging and second status information 52 indicating a general availability of the identified provider accounts for charging. Still further, the processor circuit 32 is configured to evaluate the provider account status information 22 to determine which identified provider accounts are candidates for charging with respect to the chargeable event, each such identified provider account being referred to as a candidate provider account and retrieve provider account information 26 from the account balance management node 24 only for the candidate provider accounts, for use in said credit control.

This intelligently limited retrieval of account information only for those accounts that are indicated as actual candidates for charging with respect to the chargeable event means that the charging system 18 avoids unnecessary account information retrieval and avoids needless account locking and/or charging reservation operations for accounts that are not actual candidates for charging with respect to the specific chargeable event at issue, for the specifically involved consumer.

In some embodiments, the processor circuit 32 is configured to fetch the provider account status information 22 from a data store 23 that is local to the communication network node 20. In other embodiments, the data store (or stores) 23 is (are) remote from the node 20 and the processor circuit 32 is configured to perform remote access for the fetching.

Broadly, the identified provider accounts are among a number of provider accounts, the consumer is among a number of consumers, and the processor circuit 32 is further configured to maintain the provider account status information 22 for the number of provider accounts and the number of consumers. Consequently, as suggested in Fig. 5 for example, the provider account status information 22 includes, for each provider account, first status information 50 indicating the consumer-specific availability of the provider account for charging with respect to one or more of the consumers, and second status information 52 indicating a general availability of the provider account for charging.

In the same or one or more other embodiments, the processor circuit 32 is configured to maintain the provider account status information 22 by dynamically updating the provider account status information 22 to reflect provider account changes, deletions or additions, as indicated by updated provider account information 26 received by or generated within the communication network node 20. For example, the processor circuit 32 is configured to dynamically update the provider account status information 22 by updating one or more of the following indicators for each provider account and/or consumer that is associated with the updated provider account information 26: an update date indicator that indicates the most recent date at which account credit information for the provider account was last updated; an empty/not-empty status indicator that indicates whether the provider account is deemed as being empty, at least with respect to one or more indicated consumers, and a corresponding empty/not-empty status date indicator that indicates the most recent date at which the empty/not-empty status indicator was updated; an expiry date indicator that indicates an expiration date for credit in the provider account; and one or more pattern indicators or other control values that indicate one or more usage restrictions associated with usage of the provider account by a corresponding one or more of the consumers.

Further, in some embodiments, the processor circuit 32 is configured to update the provider account status information 22 for any of the candidate provider accounts that are selected for credit control with respect to the chargeable event, to reflect debiting or credit reservations applied to any such candidate provider account with respect to the chargeable event.

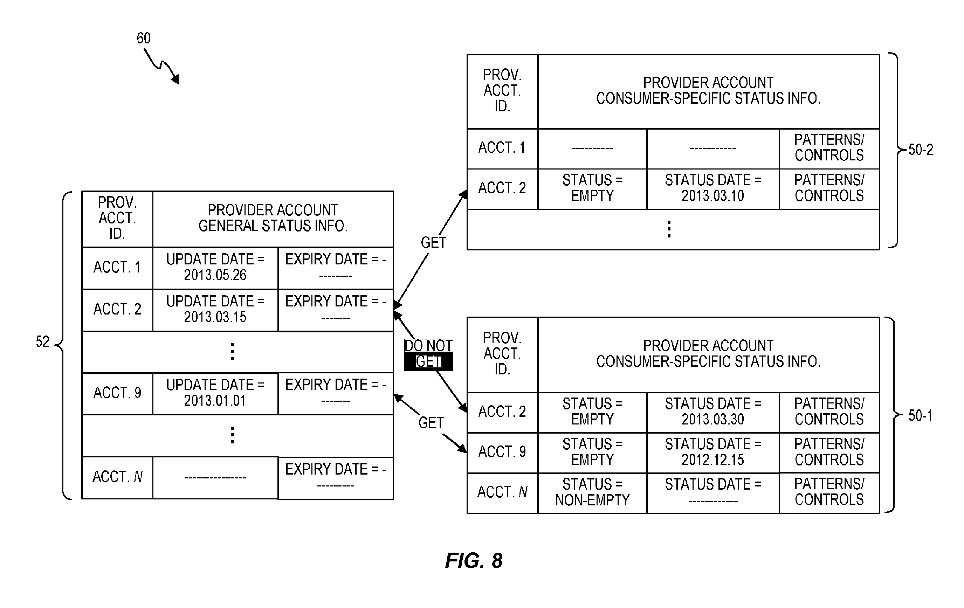

In at least one embodiment and as suggested in the non-limiting example of Fig. 8, the processor circuit 32 is configured to maintain at least a portion of the provider account status information 22 in a common data structure 60 that aggregates the second status information 52 for multiple provider accounts. In Fig. 8, one sees second status information 52 that is general to a given provider account, and associated first status information 50-1 and 50-2 that are specific to first and second consumers with respect to the provider account.

While Fig. 8 depicts "PATTERNS/CONTROLS" as being one or more data items or information fields within the first status information 50-1 and 50-2, for providing consumer-specific usage patterns or controls (e.g., date/time restrictions on account usage, usage type restrictions, etc.), it should be noted that the second status information 52 for given provider accounts may also include similar "PATTERNS/CONTROLS" information. However, in that case, such patterns or controls for regulating or restricting usage of the account will be generally applicable to the provider accounts, rather than specific to individual consumers associated with those accounts.

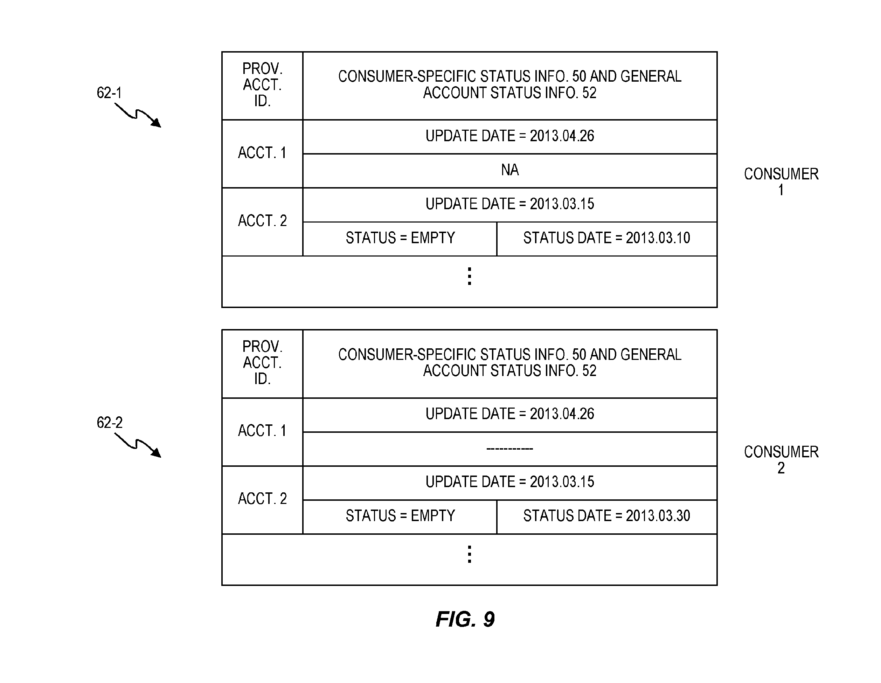

Additionally or alternatively, in at least one embodiment, the processor circuit 32 is further configured to maintain at least a portion of the provider account status information 22 in consumer-specific data structures 62, such as shown in the non-limiting example of Fig. 9. Each consumer-specific data structure 62 contains copies of the second status information 52, at least for the provider accounts with which the consumer has an association, and further containing the first status information 50 for the consumer with respect to the associated provider accounts. The example involves two consumers, Consumer 1 and Consumer 2. A data structure 62-1 is specific to Consumer 1, while the data structure 62-2 is specific to Consumer 2, and one sees that each given data structure may include consumer-specific information for any number of provider accounts.

With respect to a given consumer associated with a given chargeable event, the processor circuit 32 also may be configured to perform an initial screening of all provider accounts that are associated with the given consumer, to determine the identified provider accounts as an initially culled set of the provider accounts that are associated with the consumer. For example, there may be top-level date and/or chargeable event types that exclude certain provider accounts from charging consideration, even though subscription information stored in the network indicates that such accounts are affiliated in with the consumer.

As for actual credit control processing, the processor circuit 32 in one or more embodiments is configured to perform credit control for a given consumer and given chargeable event, based on evaluating the provider account information 26 as retrieved for the candidate provider accounts and selecting one or more of the candidate provider accounts for credit reservation or debiting with respect to the chargeable event, in dependence on the retrieved provider account information 26.

In at least one such embodiment, the processor circuit 32 is configured to consider defined account priorities or preferences when selecting the one or more candidate provider accounts for credit reservation or debiting with respect to the chargeable event. For example, one account may be cheaper or in some sense more preferred for charging than another account. Additionally or alternatively, the processor circuit 32 is further configured to consider a consumer account associated with the consumer as an additional or alternative candidate for credit reservation or debiting with respect to the chargeable event. For example, the consumer may have an individual subscriber account available for charging all or a part of the chargeable event, and the consumer account may be evaluated for charging in conjunction with the candidate provider accounts.

As for evaluating the provider account status information 22 to identify the candidate provider accounts for a given chargeable event involving a given consumer, in at least some embodiments the processor circuit 32 is configured to evaluate the provider account status information 22 to determine which identified provider accounts are candidates for charging with respect to the chargeable event by disqualifying any identified provider account from consideration as a candidate provider account when the corresponding provider account status information 22 indicates the identified provider account as being deemed empty at a date that is later in time than an update date of the most recent updating of account credit information for the identified provider account. Additionally or alternatively, the processor circuit 32 is configured to evaluate the provider account status information 22 to determine which identified provider accounts are candidates for charging with respect to the chargeable event by disqualifying any identified provider account from being considered as a candidate provider account when the corresponding provider account status information 22 indicates that an expiry date for the identified provider account is earlier in time than a service date associated with the chargeable event.

In the same or other embodiments, the processor circuit 32 is configured to evaluate the provider account status information 22 to determine which identified provider accounts are candidates for charging with respect to the chargeable event by disqualifying any identified provider account from being considered as a candidate provider account, if the chargeable event violates any one or more usage restrictions indicated for the identified provider account by the corresponding provider account status information 22. Additionally or alternatively, the processor circuit 32 is configured to evaluate the provider account status information 22 to determine which identified provider accounts are candidates for charging with respect to the chargeable event by disqualifying any identified provider account from consideration as a candidate provider account when the corresponding provider account status information 22 indicates the identified provider account is unavailable on either a consumer-specific basis or on a general basis.

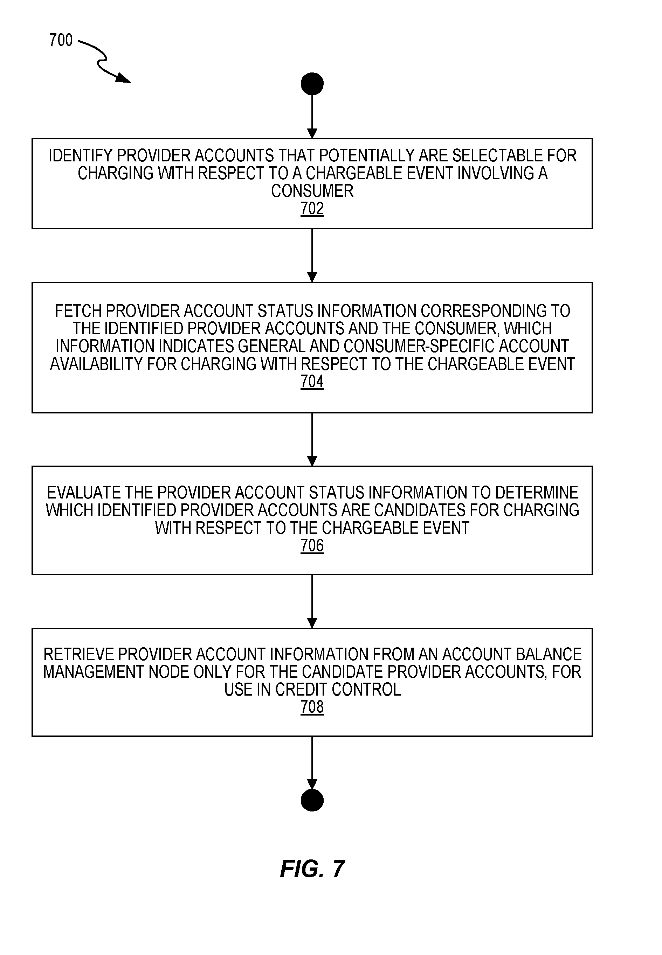

These and other variations are contemplated in the method 700 that is broadly illustrated in Fig. 7. The node 20 may be configured to perform the method 700 based on its execution of stored computer program instructions embodying the processing operations of the method 700. It will be understood that the method 700 may be performed in an order different than that illustrated, that one or more steps may be performed in parallel or on an ongoing or repeated basis, and that the method 700 may be performed with respect to given chargeable events as they occur, for any number of consumers.

With these points in mind, the method 700 includes identifying (Block 702) provider accounts that potentially are selectable for charging with respect to a chargeable event involving a consumer, which provider accounts, if any, are referred to as identified provider accounts. The method 700 includes fetching (Block 704) provider account status information 22 corresponding to the identified provider accounts and the consumer, which provider account status information 22 includes first status information 50 indicating a consumer-specific availability of the identified provider accounts for charging and second status information 52 indicating a general availability of the identified provider accounts for charging.

Still further, the method 700 includes evaluating (Block 706) the provider account status information 22 to determine which identified provider accounts are candidates for charging with respect to the chargeable event, each such identified provider account being referred to as a candidate provider account, and retrieving (Block 708) provider account information 26 from an account balance management node 24 only for the candidate provider accounts, for use in the credit control.

As noted, it is advantageously recognized herein that for a given chargeable event within the communication network 10, only one or a relative few accounts may actually be chargeable from among multiple accounts that are linked to the consumer and are in theory available for charging. The provider account status information 22 allows the node 20 to avoid retrieving provider account information for provider accounts that are associated with a given consumer involved in a given chargeable event, but are not available for charging either on a general basis or on a consumer/event specific basis.

Refer again to Fig. 8 for a working example of how the consumer-specific portion of the provider account status information 22 produces different candidate provider account determinations for different consumers. The second status information 52 shown in Fig. 8 includes general availability information for a number *N* of provider accounts, abbreviated as ACCT. 1 through ACCT. *N*. This information includes an update date for each account, indicating the date at which the credit information for the account was last updated.

Fig. 8 also first status information 50-1 for a first consumer and first status information 50-2 for a second consumer. The first status information 50-1 indicates the availability of provider accounts ACCT. 2, ACCT. 9 and ACCT. *N* for charging with respect to the specific consumer represented by the first status information 50-1. To the extent that subscription information in the communication network associates this consumer with additional provider accounts, they also would include entries in the first status information 50-1.

Similarly, the first status information 50-2 illustrates the availability of the provider accounts ACCT. 1 and ACCT. 2 with respect to the specific consumer represented by the first status information 50-2. If this second consumer were associated with other provider accounts, they would be represented in the same data structure. Again, subscription information linking given consumers, devices, and accounts may be stored in a Home Subscriber Server (HSS) or other node(s) within the communication network 10, and may be used for discovering which consumers are affiliated with which provider accounts.

Now, assume that a first consumer associated with the first status information 50-1 is involved in a chargeable event and the processing circuit 32 identifies which provider accounts associated with the first consumer are actual candidates for charging with respect to the event. The first status information 50-1 for the first consumer indicates that the first consumer is associated with provider accounts ACCT. 2, ACCT. 9 and ACCT. *N.*

The second status information 52 for ACCT. 2 shows that credit information for ACCT. 2 last updated on 2013.03.15. However, one sees from the first status information 50-1 that ACCT. 2 was deemed empty for the first consumer as of 2013.03.30. With the consumer-specific empty date occurring later in time than the general account update date, the processing circuit 32 recognizes that there is no point in retrieving account information for ACCT. 2 with respect to charging the event and ACCT. 2 is disqualified as being considered a candidate provider account for charging with respect to the chargeable event involving the first consumer.

However, the update date for ACCT. 9 is 2013.01.01 while the consumer-specific empty/not-empty status for the first consumer is indicated in the first status information 50-1 as being 2012.12.15. Here, the processing circuit 32 recognizes that ACCT. 9 has been updated after the consumer-specific empty status was last determined for the first consumer with respect to ACCT. 9, so ACCT. 9 is not disqualified as a function of the consumer-specific "empty" status and it is considered as a candidate provider account for which account information is retrieved from the account balance management node 24 (unless some other disqualifier applies, e.g., from the pattern/controls indicator(s)).

Now, if one assumes that the same ACCT. 2 is evaluated with respect to another chargeable event involving a second consumer having first status information 50-2, one sees that the consumer-specific empty/not-empty status information for ACCT. 2 is earlier than the general account update date indicated for ACCT. 2 in the second status information 52. Thus, where account information for ACCT. 2 was not retrieved for the first consumer, the processing circuit 32 here recognizes that the empty status for ACCT. 2 with respect to the second consumer was determined before the general credit information for ACCT. 2 was last updated. Hence, the processing circuit 32 does not disqualify ACCT. 2 as a candidate provider account with respect to the second consumer, although it did disqualify the same account with respect to the first consumer.

For simplicity, the above example did not consider expiry date information for the involved provider accounts, but one sees in Fig. 8 that second status information 52 may include an "EXPIRY DATE" field or other information element for each provider account. The current date/time of a given chargeable event thus can be compared to the expiry date information for a given provider account, to determine whether the provider account is a prospective candidate for charging and such comparisons can be made in conjunction with the comparisons discussed in the above example.

In the above contexts, it is recognized herein that when a chargeable event can, in theory, be charged to any one or more accounts among a number of accounts, it is likely that one or more of those accounts is not, in practice, available or preferable for such charging. Current approaches to account data fetching do not address that recognition and result in unnecessary data fetches, undesirable account locking and/or reservation actions, and generally high transaction costs-in terms of processing time and data transfers-when attempting to determine how to charge events when the involved devices are associated with multiple accounts. In contrast, the method and apparatus taught herein provide for an intelligent filtering action in which account information is retrieved only for those provider accounts that are indicated as being actual candidates for charging a given event for a given consumer.

Such indications may include the empty/not-empty status indicators and dates illustrated by way of example herein, along with other status indicators, such as indicators associated with time-limited promotional offers, where given accounts are available for charging only for limited times or for limited types of events. Other limitations, such as time-of-day and/or content-type restrictions may also be imposed and such restrictions are broadly connoted as pattern/control indicators in Fig. 8 and elsewhere herein. For example, a given consumer may be permitted to use a given provider account only during office hours, or only for certain approved types of activities.

These and other restrictions are easily handled according the teachings herein, based on dynamically maintaining the provider account status information 22. Such information may be updated based on detecting changes or receiving notices of such changes. Example account changes include but are not limited to any one or more of the following items: a provider account containing shared funds is increased on a general or consumer-specific basis; the expiry date of provider accounts funds is changed; and usage restrictions on a provider account are changed.

When a chargeable event involving a given consumer occurs or is otherwise subjected to charging processing, the provider accounts associated with the consumer are identified (with or without prescreening). Such selections may include consideration of account and/or user preferences and priorities. For identified provider accounts that may potentially be candidates for charging, the processing circuit 32 compares the consumer-specific empty dates with the last update dates of the corresponding provider accounts and disqualifies from consideration all the provider accounts that have update dates earlier in time than the corresponding consumer-specific empty-status dates stored for those accounts.

The processing circuit 32 also compares the expiry date with the date of the chargeable event and if the expiry date for the provider account is earlier in time than the chargeable event date, the provider account is disqualified from being considered as a candidate provider account for charging the event.

Still further, in a continuation of the above example embodiment, for each provider account that is associated with the involved consumer, the processing circuit 32 is configured to compare any consumer-specific patterns or other controls stored in the first status information 50 held for the involved consumer, to corresponding parameters of the chargeable event. For example, the involved consumer may not be permitted to use the account outside of work hours, or outside of given geographic locations, or may not be allowed to charge multimedia streaming service usage to the provider account, etc. If any of the pattern or control restrictions are violated, the processing circuit 32 disqualifies the provider account from consideration as a candidate provider account for charging the event.

Such processing results in a typically shortened list of candidate provider accounts for use in credit control and allows the node 20 to fetch account information only for the shortened list of candidate provider accounts. Avoiding the retrieval of account information for provider accounts that are affiliated with the consumer but are not in actuality candidates for charging for the particular chargeable event at issue for the involved consumer reduces wasteful traffic in the CN 16, avoids locking or reserving accounts that ultimately would not be used for charging in any case, and in general simplifies credit control operations.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method (700) in a communication network node (20) for facilitating credit control, said method comprising:
identifying (702) provider accounts that potentially are selectable for charging with respect to a chargeable event involving a consumer, which provider accounts, if any, are referred to as identified provider accounts;
fetching (704) provider account status information (22) corresponding to the identified provider accounts and the consumer, which provider account status information (22) includes first status information (50) indicating a consumer-specific availability of the identified provider accounts for charging and second status information (52) indicating a general availability of the identified provider accounts for charging;
evaluating (706) the provider account status information (22) to determine which identified provider accounts are candidates for charging with respect to the chargeable event, each such identified provider account being referred to as a candidate provider account; and
retrieving (708) provider account information (26) from an account balance management node (24) only for the candidate provider accounts, for use in said credit control.

2. The method (700) of claim 1, wherein fetching the provider account status information (22) comprises fetching the provider account status information (22) from a data store (23) that is local to the communication network node (20).

3. The method (700) of claim 1 or 2, wherein the identified provider accounts are among a number of provider accounts, the consumer is among a number of consumers, and wherein the method further comprises maintaining the provider account status information (22) for the number of provider accounts and the number of consumers, such that the provider account status information (22) includes, for each provider account, first status information (50) indicating the consumer-specific availability of the provider account for charging with respect to one or more of the consumers, and second status information (52) indicating a general availability of the provider account for charging.

4. The method (700) of claim 3, wherein said step of maintaining comprises dynamically updating the provider account status information (22) to reflect provider account changes, deletions or additions, as indicated by updated provider account information (26) received by or generated within the communication network node (20).

5. The method (700) of any of claims 1-4, further comprising updating the provider account status information (22) for any of the candidate provider accounts that are selected for credit control with respect to the chargeable event, to reflect debiting or credit reservations applied to any such candidate provider account with respect to the chargeable event.

6. The method (700) of any of claims 1-5, further comprising maintaining at least a portion of the provider account status information (22) in a common data structure (60) that aggregates the second status information (52) for multiple provider accounts.

7. The method (700) of any of claims 1-6, further comprising maintaining at least a portion of the provider account status information (22) in consumer-specific data structures (62), each consumer-specific data structure (62) containing copies of the second status information (52), at least for the provider accounts with which the consumer has an association, and further containing the first status information (50) for the consumer with respect to the associated provider accounts.

8. The method (700) of any of claims 1-7, further comprising performing an initial screening of all provider accounts that are associated with the consumer to determine the identified provider accounts as an initially culled set of the provider accounts that are associated with the consumer.

9. The method (700) of any of claims 1-8, further comprising performing said credit control by evaluating the provider account information (26) as retrieved for the candidate provider accounts and selecting one or more of the candidate provider accounts for credit reservation or debiting with respect to the chargeable event, in dependence on the retrieved provider account information (26).

10. A communication network node (20) for facilitating credit control, said node (20) comprising:
communication interface circuits (30) configured to communicate with one or more other network nodes, including an account balance management node (24); and
a processing circuit (32) that is configured to:
identify provider accounts that potentially are selectable for charging with respect to a chargeable event involving a consumer, which provider accounts, if any, are referred to as identified provider accounts;
fetch provider account status information (22) corresponding to the identified provider accounts and the consumer, which provider account status information (22) includes first status information (50) indicating a consumer-specific availability of the identified provider accounts for charging and second status information (52) indicating a general availability of the identified provider accounts for charging;
evaluate the provider account status information (22) to determine which identified provider accounts are candidates for charging with respect to the chargeable event, each such identified provider account being referred to as a candidate provider account; and
retrieve provider account information (26) from the account balance management node (24) only for the candidate provider accounts, for use in said credit control.

11. The communication network node (20) of claim 10, wherein the processor circuit (32) is configured to fetch the provider account status information (22) from a data store (23) that is local to the communication network node (20).

12. The communication network node (20) of claim 10 or 11, wherein the identified provider accounts are among a number of provider accounts, the consumer is among a number of consumers, and wherein the processor circuit (32) is further configured to maintain the provider account status information (22) for the number of provider accounts and the number of consumers, such that the provider account status information (22) includes, for each provider account, first status information (50) indicating the consumer-specific availability of the provider account for charging with respect to one or more of the consumers, and second status information (52) indicating a general availability of the provider account for charging.

13. The communication network node (20) of claim 12, wherein the processor circuit (32) is configured to maintain the provider account status information (22) by dynamically updating the provider account status information (22) to reflect provider account changes, deletions or additions, as indicated by updated provider account information (26) received by or generated within the communication network node (20).

14. The communication network node (20) of any of claims 10-13, wherein the processor circuit (22) is configured to update the provider account status information (22) for any of the candidate provider accounts that are selected for credit control with respect to the chargeable event, to reflect debiting or credit reservations applied to any such candidate provider account with respect to the chargeable event.

15. The communication network node (20) of any of claims 10-14, wherein the processor circuit (32) is configured to maintain at least a portion of the provider account status information (22) in a common data structure (60) that aggregates the second status information (52) for multiple provider accounts.

16. The communication network node (20) of any of claims 10-15, wherein the processor circuit (32) is further configured to maintain at least a portion of the provider account status information (22) in consumer-specific data structures (62), each consumer-specific data structure (62) containing copies of the second status information (52), at least for the provider accounts with which the consumer has an association, and further containing the first status information (50) for the consumer with respect to the associated provider accounts.

17. The communication network node (20) of any of claims 10-16, wherein the processor circuit (32) is further configured to perform an initial screening of all provider accounts that are associated with the consumer to determine the identified provider accounts as an initially culled set of the provider accounts that are associated with the consumer.

18. The communication network node (20) of any of claims 10-17, wherein the processor circuit (32) is further configured to perform said credit control by evaluating the provider account information (26) as retrieved for the candidate provider accounts and selecting one or more of the candidate provider accounts for credit reservation or debiting with respect to the chargeable event, in dependence on the retrieved provider account information (26).
